# EUROPÄISCHE PATENTSCHRIFT

(11) **EP 4 189 356 B1**
(45) Veröffentlichungstag und Bekanntmachung des Hinweises auf die Patenterteilung: **21.08.2024**
(21) Anmeldenummer: 21749198.4
(22) Anmeldetag: 26.07.2021
(51) Int. Cl.: G01M 17/02

(54) **REIFENPRÜFSTAND ZUM PRÜFEN VON FAHRZEUGREIFEN**
TEST BENCH FOR TESTING VEHICLE TIRES
BANC D'ESSAI POUR TESTER DES PNEUS DE VÉHICULE

(30) Priorität: 29.07.2020 DE 102020209547
(43) Veröffentlichungstag der Anmeldung: 07.06.2023
(73) Patentinhaber: ZF Friedrichshafen AG, 88046 Friedrichshafen (DE)
(72) Erfinder: DOLLINGER, Thomas, 94036 Passau (DE); GRIEBL, Andreas, 94542 Haarbach (DE); STEMPLINGER, Florian, 94110 Wegscheid (DE)
(86) Internationale Anmeldenummer: PCT/EP2021/070860
(87) Internationale Veröffentlichungsnummer: WO 2022/023269

(56) Entgegenhaltungen:
- WO-A1-2015/118657
- DE-A1- 2 831 978
- US-A1- 2006 169 034

## Beschreibung

Die vorliegende Erfindung betrifft einen Reifenprüfstand gemäß dem Oberbegriff von Anspruch 1.

Im Stand der Technik sind Reifenprüfstände bekannt, mittels derer Fahrzeugreifen einer Vielzahl von unterschiedlichen Prüfverfahren unterworfen werden können. Bekannte Ausbildungsformen von Reifenprüfständen sind etwa sog. Halbachsprüfstände, Reifencharakteristikprüfstände und Rollwiderstandsprüfstände. Bei vielen unterschiedlichen Prüfverfahren für Fahrzeugreifen werden Kräfte simuliert, wie sie im tatsächlichen Fahrbetrieb zwischen dem Fahrzeugreifen und der Fahrbahn auftreten. Als Fahrbahnersatz wird dabei in der Regel eine Lauftrommel verwendet.

Bei einem sog. Balance-Prüfverfahren beispielsweise wird ohne Lauftrommelkontakt geprüft, bei einem sog. Uniformity- Prüfverfahren hingegen wird mit Lauftrommelkontakt am Reifen geprüft. Beide Prüfverfahren können in einem einzigen Reifenprüfstand in einem Prüftakt kombiniert sein. Hierbei wird für das Uniformity- Prüfverfahren die nicht angetriebene Lauftrommel über den Reifen als Reibrad wirkend aus dem Stillstand heraus beschleunigt. Die Lauftrommel gelangt dann nach der Prüfung zum Stillstand durch austrudeln.

Es ist bei den bekannten Reifenprüfständen zudem üblich, zur Vermeidung von Reifenabrieb bzw. Reifenverschleiß und daraus resultierender Verschmutzung, den zu prüfenden Fahrzeugreifen und die Lauftrommel erst dann in Kontakt zu bringen, wenn diese eine identische Laufgeschwindigkeit aufweisen.

In diesem Zusammenhang beschreibt die DE 10 2006 011 703 A1 eine Testvorrichtung für ein Fahrzeugrad mit einer Radtestspindel, die das Rad und einen auf dem Rad aufgezogenen Reifen bei der Drehung stützt. Eine Straßensimulationstrommel mit einer Außenoberfläche wird bei einem Testvorgang durch den Reifen berührt. Die DE 299 23 728 U1 beschreibt eine Lauftrommel für einen Kraftfahrzeug- oder Reifenprüfstand, wobei ein Segment der Lauffläche herausnehmbar ist und ein Hindernis mit negativer radialer Erhebung eingesetzt werden kann. In den zylindrischen Lauftrommelmantel ist eine planbearbeitete Trägerplatte eingeschweißt, auf die verschiedene Hindernisse und das herausnehmbare Original-Laufflächenstück aufgeschraubt werden können.

Aus der DE 10 2017 217 816 A1 ist eine Lauftrommelanordnung mit einem Trommelkörper für einen Prüfstand bekannt. Der Trommelkörper ist auf einem Grundgestell angeordnet und durch einen Reibradantrieb antreibbar.

Die DE 28 31 978 A1 offenbart einen Reifenprüfstand für Dauermüdungsversuche, der eine stationäre Prüftrommel, einen auf einem Schlitten verfahrbaren, zu prüfenden Reifen sowie einen ebenfalls auf einem Schlitten verfahrbaren Sekundärreifen umfasst. Der Sekundärreifen kann in Anlage mit der Prüftrommel gebracht werden, um diese anzutreiben. Ebenso kann der zu prüfende Reifen in Anlage mit der Prüftrommel gebracht werden, um von dieser angetrieben zu werden. Der zu prüfende Reifen weist zudem einen eigenen Antrieb auf, mittels dessen er angetrieben werden kann.

Die D2 US 2006/169034 A1 offenbart ein Verfahren und eine Vorrichtung zum Testen von Gummireifen. Die Vorrichtung umfasst einen Schleifer zum Reiben an der Oberfläche des Reifens und einen Radierer zum Entfernen von Gummipartikeln, die vom Reifen auf der Schleifoberfläche zurückgeblieben sind.

Die WO 2015/118657 A1 offenbart eine Reifenprüfvorrichtung zum Messen der Ungleichförmigkeit eines Reifens. Die Reifenprüfvorrichtung umfasst einen Prüfmaschinenkörper, eine Reifendrehwelle, einen Radträger, ein Lastrad und eine Reifenreaktionskraftmesseinheit. Der das Lastrad tragender Radträger kann mittels eines Kugelumlaufspindelmechanismus' zur Reifendrehwelle verfahren werden, so dass das Lastrad in Anlage mit dem zu prüfenden Reifen gelangt.

Die bekannten Reifenprüfstände sind jedoch dahingehend nachteilbehaftet, als dass Lauftrommeln der bekannten Reifenprüfstände in der Regel nicht angetrieben sind und schon aufgrund ihres Durchmessers von typischerweise über einem Meter sowie ihrer metallischen Ausbildung ein vergleichsweise hohes Trägheitsmoment aufweisen. Da die Lauftrommeln nach jedem Prüfdurchlauf ausrollen, sind vergleichsweise dementsprechend große Wartezeiten erforderlich, um eine Synchronisation der Laufgeschwindigkeit der Lauftrommel mit dem zu prüfenden Fahrzeugreifen zu erreichen. Derart langwierige Synchronisierungsvorgänge jedoch beeinflussen die Taktzeit des Reifenprüfstands ungünstig. Sofern doch ein Antrieb zum Beschleunigen bzw. Bremsen der Lauftrommel vorgesehen ist, so beeinflusst dieser während eines Prüfzyklusses das Rollverhalten der Lauftrommel und damit auch das Rollverhalten des zu prüfenden Fahrzeugreifens nachteilig.

Es ist eine Aufgabe der Erfindung, einen Reifenprüfstand mit einer verbesserten Lauftrommelanordnung vorzuschlagen.

Diese Aufgabe wird erfindungsgemäß durch einen Reifenprüfstand gemäß Anspruch 1 gelöst. Vorteilhafte Ausgestaltungen und Weiterbildungen der Erfindung gehen aus den abhängigen Ansprüchen hervor.

Die Erfindung betrifft einen Reifenprüfstand mit einer Lauftrommelanordnung einem Trommelkörper und einem Reibradantrieb, wobei der Trommelkörper an seinem Außenumfang eine Lauffläche zur Anlage für einen Fahrzeugreifen aufweist und um seine Laufachse rotierbar angeordnet ist und wobei der Reibradantrieb dazu ausgebildet ist, in Anlage mit dem Trommelkörper den Trommelkörper anzutreiben. Die erfindungsgemäße Lauftrommelanordnung zeichnet sich dadurch aus, dass der Reibradantrieb auf einem Reibradschlitten angeordnet ist, wobei der Reibradschlitten dazu ausgebildet ist, den Reibradantrieb entlang einer Zustellrichtung zu verschieben, so dass der Reibradantrieb in Anlage mit dem Trommelkörper bringbar ist.

Die Lauftrommelanordnung dient insbesondere zur Fahrbahnsimulationen für einen Fahrzeugreifen.

Dazu umfasst die Lauftrommelanordnung einen Trommelkörper, der im Rahmen der Fahrbahnsimulation die Lauffläche für den Fahrzeugreifen darstellt. Bevorzugt weist der Trommelkörper eine zylindrische Form auf, wobei sein Außenumfang als Lauffläche für den Fahrzeugreifen ausgebildet ist. Vorteilhaft ist die Lauffläche durch die Zylindermantelaußenfläche des Trommelkörpers gebildet.

Der Trommelkörper ist derart an der Lauftrommelanordnung angeordnet, dass er um seine Laufachse rotierbar ist. Vorteilhaft umfasst die Lauftrommelanordnung beispielsweise ein Grundgestellt, an welchem der Trommelkörper rotierbar angeordnet ist. Die Laufachse des zylindrischen Trommelkörpers ist bevorzugt identisch mit seiner Längsachse.

Weiterhin umfasst die Lauftrommelanordnung einen Reibradantrieb, welcher den Trommelkörper antreiben und insbesondere auch abbremsen kann. Dazu umfasst der Reibradantrieb ein Reibrad, welches eine reibschlüssige oder kraftschlüssige Verbindung zum Trommelkörper erlaubt, wenn es in Anlage mit dem Trommelkörper steht, insbesondere in Anlage mit der Lauffläche des Trommelkörpers steht. Erfindungsgemäß ist es nun vorgesehen, dass der Reibradantrieb auf einem von der Lauftrommelanordnung umfassten Reibradschlitten angeordnet ist, wobei der Reibradschlitten dazu ausgebildet ist, den Reibradantrieb entlang einer Zustellrichtung zu verschieben, so dass der Reibradantrieb in Anlage mit dem Trommelkörper bringbar ist. Dazu kann der Reibradschlitten beispielsweise auf einer hierfür vorgesehenen Schiene angeordnet sein.

Dadurch wird es voreilhaft ermöglicht, den Reibradantrieb bedarfsweise in Anlage mit dem Trommelkörper zu bringen, insbesondere in Anlage mit der Lauffläche zu bringen. Ebenso kann der Reibradantrieb auch wieder vom Trommelkörper bzw. von der Lauffläche entfernt werden, wenn kein weiteres Antriebsmoment bzw. Bremsmoment am Trommelkörper benötigt wird.

Bei einem typischen Reifenprüfzyklus werden unterschiedliche Geschwindigkeitsintervalle durchfahren und dabei das Abrollverhalten des zu prüfenden Fahrzeugreifens untersucht. Um die erforderliche Synchronisation der Laufgeschwindigkeit der Lauftrommel mit dem zu prüfenden Fahrzeugreifen schneller erreichen zu können, kann beispielsweise bei einem Wechsel des zu prüfenden Fahrzeugreifens vorteilhaft über den Reibradantrieb die Geschwindigkeit des Trommelkörpers eingestellt werden, während der nächste zu prüfende Fahrzeugreifen aufgenommen und auf den Prüfvorgang vorbereitet wird.

Während des eigentlichen Prüfvorgangs kann dann der Reibradantrieb über den Reibradschlitten wieder vom Trommelkörper entfernt werden, so dass ein Rollverhalten des Fahrzeugreifens nicht mittelbar über den Reibradantrieb beeinflusst wird.

Somit lassen sich qualitativ hochwertige Prüfdaten bei vergleichsweise kurzen Taktzeiten erzielen.

Unter dem Begriff "Laufgeschwindigkeit" wird im Sinne der Erfindung diejenige translatorische Geschwindigkeit verstanden, die ein zylinderförmiger Körper, wie etwa der Trommelkörper oder der Fahrzeugreifen, haben würde, wenn er mit der jeweils eingestellten Drehzahl tatsächlich über einen Untergrund rollen würde. Da die Lauftrommel in der Regel einen deutlich größeren Durchmesser aufweist als der Fahrzeugreifen, erreicht sie bereits bei entsprechend geringeren Drehzahlen die gleiche Laufgeschwindigkeit wie ein auf ihr abrollender Fahrzeugreifen.

Gemäß einer bevorzugten Ausführungsform der Erfindung ist es vorgesehen, dass der Reibradantrieb in Anlage mit dem Außenumfang der Lauffläche bringbar ist oder in Anlage mit einem Innenumfang der Lauffläche bringbar ist. Je nachdem, ob der Reibradantrieb mit dem Außenumfang oder mit dem Innenumfang der Lauffläche bringbar ist, ist der Reibradantrieb mit dem Reibradschlitten vorteilhaft außerhalb oder innerhalb des Trommelkörpers angeordnet. Eine Anordnung außerhalb des Trommelkörpers bietet dabei den Vorteil einer vergleichsweise guten Zugänglichkeit und einfachen Montage, während eine Anordnung innerhalb des Trommelkörpers eine vergleichsweise raumsparende und kompakte Ausbildung der Lauftrommelanordnung ermöglicht.

Gemäß einer weiteren bevorzugten Ausführungsform der Erfindung ist es vorgesehen, dass der Reibradantrieb einen Reibradmotor umfasst, wobei der Reibradmotor dazu ausgebildet ist, eine Drehzahl des Reibradantriebs einzustellen. Der Reibradmotor ist bevorzugt als Elektromotor ausgebildet und treibt das Reibrad unmittelbar oder mittelbar über eine Übersetzungsstufe an.

Bevorzugt ist es vorgesehen, dass der Reibradantrieb darüber hinaus eine Bremse umfasst, welche eine Drehzahl des Reibradantriebs reduzieren kann. Die Bremse kann beispielsweise als mechanische Reibungsbremse oder als kontaktfreie Wirbelstrombremse ausgebildet sein.

Gemäß einer weiteren bevorzugten Ausführungsform der Erfindung ist es vorgesehen, dass der Reibradantrieb dazu ausgebildet ist, eine Drehzahl des Trommelkörpers um seine Laufachse einzustellen. Das bedeutet, dass der Reibradantrieb insbesondere hinsichtlich seiner mechanischen Leistung, also Drehmoment und Drehzahl, aber auch hinsichtlich seiner Fähigkeit, eine Triebverbindung zum Trommelkörper herzustellen, dazu geeignet ist, die Drehzahl des Trommelkörpers um seine Laufachse einzustellen. Somit kann der Trommelkörper über den Reibradantrieb auf einfache Weise auf die gewünschte Drehzahl eingestellt werden. Der Elektromotor ermöglicht dabei nicht nur Erhöhungen der Drehzahl des Trommelkörpers sondern auch Reduzierungen der Drehzahl des Trommelkörpers.

Gemäß einer weiteren bevorzugten Ausführungsform der Erfindung ist es vorgesehen, dass der Trommelkörper metallisch ausgebildet ist. Daraus ergibt sich eine große Haltbarkeit und nur geringer Verschleiß insbesondere der Lauffläche des Trommelkörpers auch bei ständiger Verwendung und unter hohen Belastungen.

Durch die Ausbildung aus Metall weist der Trommelkörper jedoch ein vergleichsweise hohes Trägheitsmoment auf, was wiederum insbesondere ohne den erfindungsgemäß vorgesehenen Reibradantrieb zu vergleichsweise langwierigen Beschleunigungs- und Bremsvorgängen führen würde.

Gemäß einer weiteren bevorzugten Ausführungsform der Erfindung ist es vorgesehen, dass der Außenumfang einen Durchmesser von wenigstens 1,5 m aufweist und die Lauffläche eine Breite von wenigstens 0,5 m aufweist. Die Lauftrommelanordnung eignet sich damit insbesondere für einen Reifenprüfstand zum Prüfen von Nutzfahrzeugreifen.

Der erfindungsgemäße Reifenprüfstand zeichnet sich dadurch aus, dass der Reifenprüfstad eine erfindungsgemäße Lauftrommelanordnung umfasst. Daraus ergeben sich die bereits in Zusammenhang mit der erfindungsgemäßen Lauftrommelanordnung beschriebenen Vorteile auch für den erfindungsgemäßen Reifenprüfstand.

Gemäß der beanspruchten Erfindung ist es vorgesehen, dass der Reifenprüfstand weiterhin eine Radspindel zur Aufnahme eines Fahrzeugreifens umfasst. Dadurch kann ein zu prüfender Fahrzeugreifen vergleichsweise einfach und insbesondere unter Wahrung vergleichsweise kurzer Taktzeiten aufgenommen, geprüft und wieder abgelegt werden.

Der Fahrzeugreifen ist dabei nicht Bestandteil der Reifenprüfstands im Sinne der Erfidnung.

Gemäß der beanspruchten Erfindung ist es vorgesehen, dass der Reifenprüfstand weiterhin einen Trommelschlitten umfasst, wobei die Lauftrommelanordnung auf dem Trommelschlitten angeordnet ist und wobei der Trommelschlitten dazu ausgebildet ist, eine Lauffläche der Lauftrommelanordnung in Anlage mit dem Fahrzeugreifen zu bringen. Daraus ergibt sich der Vorteil, dass die Lauftrommelanordnung über den Trommelschlitten an den auf der Reifenspindel angeordneten und zu prüfenden Fahrzeugreifen herangefahren werden kann und die Lauffläche der Lauftrommel in Anlage mit dem Fahrzeugreifen gebracht werden kann. Ebenso kann die Lauftrommelanordnung nach Abschluss des Prüfvorgangs über den Trommelschlitten auch wieder vom Fahrzeugreifen entfernt werden. Somit kann eine gewünschte Drehzahl der Lauftrommel also eingestellt werden, bevor die Lauftrommel in Anlage mit dem Fahrzeugreifen gelangt.

Gemäß einer weiteren bevorzugten Ausführungsform der Erfindung ist es vorgesehen, dass der Reifenprüfstand weiterhin einen Spindelmotor umfasst, wobei der Spindelmotor dazu ausgebildet ist, eine Drehzahl der Radspindel einzustellen. Somit können während des Prüfvorgangs beispielsweise auch ein Beschleunigungsverhalten und ein Verzögerungsverhalten des Fahrzeugreifens geprüft werden. Bevorzugt handelt es sich bei dem Spindelmotor um einen Elektromotor.

Gemäß einer weiteren bevorzugten Ausführungsform der Erfindung ist es vorgesehen, dass der Reifenprüfstand Synchronisierungsmittel umfasst, wobei die Synchronisierungsmittel dazu ausgebildet sind, eine Laufgeschwindigkeit des Fahrzeugreifens und eine Laufgeschwindigkeit eines Trommelkörpers der Lauftrommelanordnung zu synchronisieren. Die Synchronisierungsmittel stimmen also die Laufgeschwindigkeit des Trommelkörpers und die Laufgeschwindigkeit des Fahrzeugreifens dahingehend ab, dass diese identisch sind und somit die Lauftrommel mit ihrer Laufbahn in Anlage mit dem Fahrzeugreifen zur Durchführung eines Prüfvorgangs gebracht werden kann.

Die Synchronisierungsmittel umfassen bevorzugt Drehzahlmesser für die Reifenspindel, für die Lauftrommel sowie insbesondere auch für den Reibradantrieb. Weiterhin umfassen die Synchronisierungsmittel vorteilhaft Berechnungsmittel zum Berechnen einer Laufgeschwindigkeit der Lauftrommel sowie des Fahrzeugreifens anhand der gemessenen Drehzahlen.

Gemäß einer weiteren bevorzugten Ausführungsform der Erfindung ist es vorgesehen, dass eine Zustellachse des Trommelschlittens parallel zu einer Zustellachse eines Reibradschlittens der Lauftrommelanordnung ist.

Die Offenbarung betrifft schließlich auch ein Verfahren, welches nicht in den Schutzbereich der Ansprüche fällt, zum Prüfen von Fahrzeugreifen

in einem erfindungsgemäßen Reifenprüfstand, umfassend die Schritte:
- Aufnahme des Fahrzeugreifens auf eine Radspindel,
- Drehbeschleunigen des Fahrzeugreifens auf der Radspindel,
- Drehbeschleunigen eines Trommelkörpers mittels eines mit dem Trommelkörper in Anlage stehenden Reibradantriebs, bis eine Synchronisation einer Laufgeschwindigkeit des Trommelkörpers mit einer Laufgeschwindigkeit des Fahrzeugreifens besteht,
- Inanlagebringen einer Lauffläche des Trommelkörpers mit dem Fahrzeugreifen mittels eines Trommelschlittens und
- Durchführen eine Fahrzeugreifenprüfung.

Das Verfahren zeichnet sich dadurch aus, dass der Reibradantrieb über einen Reibradschlitten vom Trommelkörper entfernt wird, bevor die Fahrzeugreifenprüfung durchgeführt wird. Das Verfahren ermöglicht somit die Durchführung einer Fahrzeugreifenprüfung auf einem erfindungsgemäßen Reifprüfstand unter Ausnutzung der bereits beschriebenen Vorteile.

Unter einer "Drehbeschleunigen des Fahrzeugreifens" sowie einer "Drehbeschleunigen des Trommelkörpers" wird im Sinne der Erfindung nicht nur eine positive Beschleunigung im Sinne einer Drehzahlerhöhung verstanden, sondern ebenso auch eine negative Beschleunigung im Sinne einer Drehzahlreduzierung.

Nachfolgend wird die Erfindung anhand von in den Figuren dargestellten Ausführungsformen beispielhaft erläutert.

Es zeigt:

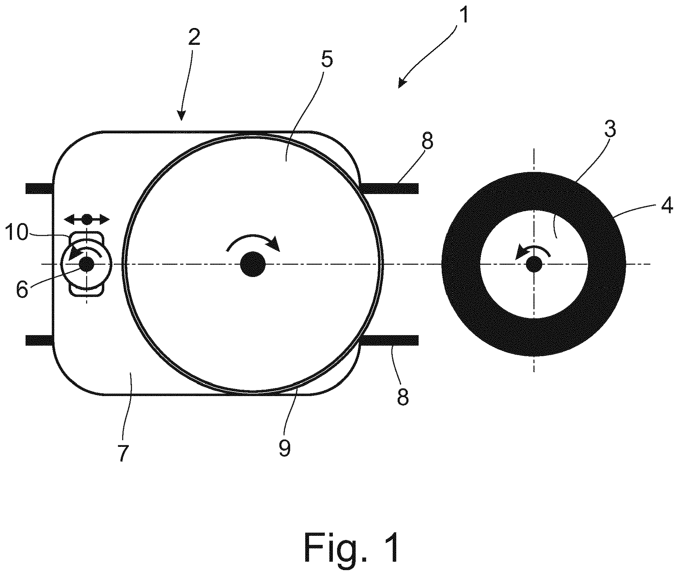

- Fig. 1: beispielhaft und schematisch eine mögliche Ausführungsform eines erfindungsgemäßen Reifenprüfstands.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt beispielhaft und schematisch eine mögliche Ausführungsform eines erfindungsgemäßen Reifenprüfstands 1, wobei der Reifenprüfstand 1 eine Lauftrommelanordnung 2 und eine Radspindel 3 umfasst.

Auf der Radspindel 3 ist beispielsgemäß ein Fahrzeugreifen 4 angeordnet, bei dem es sich um einen Nutzfahrzeugreifen 4 handelt. Der Fahrzeugreifen 4 ist nicht Bestandteil des Prüfstands 1 und dient in Fig. 1 nur der Veranschaulichung der Funktionalität des Prüfstands 1. Die Radspindel 3 umfasst einen in Fig. 1 nicht dargestellten Spindelmotor, welcher die Radspindel 3 und damit den auf der Radspindel 3 angeordneten Fahrzeugreifen 4 in eine Drehbewegung um seine Laufachse versetzen kann.

Die Lauftrommelanordnung 2 umfasst einen Trommelkörper 5 und einen Reibradantrieb 6, welche auf einem Trommelschlitten 7 der Lauftrommelanordnung 2 angeordnet sind. Der Trommelkörper 5 weist an seinem Außenumfang 9 eine Lauffläche 9 zur Anlage für den Fahrzeugreifen 4 auf und ist um seine Laufachse rotierbar angeordnet.

Der Trommelschlitten 7 ist auf einer Schiene 8 verfahrbar, so dass er die den Trommelkörper 5 mit dem Fahrzeugreifen 4 in Anlage bringen kann.

Der Reibradantrieb 6 kann durch einen als Elektromotor und in Fig. 1 nicht dargestellten Reibradmotor angetrieben werden, welcher dazu ausgebildet ist, eine Drehzahl des Reibradantriebs 6 einzustellen. Der Reibradantrieb 6 ist auf einem Reibradschlitten 10 angeordnet, welcher seinerseits auf dem Trommelschlitten 7 angeordnet ist. Der Reibradschlitten 10 ermöglicht es, den Reibradantrieb 6 in Anlage mit der Lauffläche 9 des Trommelkörpers 5 zu bringen und so eine reibschlüssige Verbindung herzustellen. Somit kann ein Drehmoment im Sinne einer Drehzahlerhöhung oder auch im Sinne einer Drehzahlreduzierung vom Reibradantrieb 6 auf den Trommelkörper 5 übertragen werden. Dies ermöglicht eine Synchronisation der Laufgeschwindigkeit des Trommelkörpers 5 mit der Laufgeschwindigkeit des Fahrzeugreifens 4. Während eines Prüfvorgangs kann der Reibradantrieb 6 dann über den Reibradschlitten 10 wieder vom Trommelkörper entfernt werden, um die Prüfergebnisse des Fahrzeugreifens 4 nicht zu beeinflussen. Wie zu sehen ist, ist eine Zustellachse des Trommelschlittens 7 parallel zu einer Zustellachse eines Reibradschlittens 10 der Lauftrommelanordnung 2.

Beispielsgemäß handelt es sich bei dem Reifenprüfstand 1 um einen Nutzfahrzeugreifenprüfstand 1 mit einem metallisch ausgebildeten Trommelkörper 5. Der Trommelkörper 5 hat beispielsgemäß einen Durchmesser von 1, 6 m und die Lauffläche 9 hat eine Breite von 0,6 m.

### Bezugszeichen

- 1: Reifenprüfstand
- 2: Lauftrommelanordnung
- 3: Radspindel
- 4: Fahrzeugreifen, Nutzfahrzeugreifen
- 5: Trommelkörper
- 6: Reibradantrieb
- 7: Trommelschlitten
- 8: Schiene
- 9: Außenumfang, Lauffläche
- 10: Reibradschlitten

## Patentansprüche

1. Reifenprüfstand (1) zum Prüfen von Fahrzeugreifen, umfassend eine Lauftrommelanordnung (2) für den Reifenprüfstand (1) mit einem Trommelkörper (5) und einem Reibradantrieb (6), wobei der Trommelkörper (5) an seinem Außenumfang (9) eine Lauffläche (9) zur Anlage für einen Fahrzeugreifen (4) aufweist und um seine Laufachse rotierbar angeordnet ist und wobei der Reibradantrieb (6) dazu ausgebildet ist, in Anlage mit dem Trommelkörper (5) den Trommelkörper (5) anzutreiben, wobei der Reibradantrieb (6) auf einem Reibradschlitten (10) angeordnet ist, wobei der Reibradschlitten (10) dazu ausgebildet ist, den Reibradantrieb (6) entlang einer Zustellrichtung zu verschieben, so dass der Reibradantrieb (6) in Anlage mit dem Trommelkörper (5) bringbar ist, der Reifenprüfstand (1) weiterhin umfassend eine Radspindel (3) zur Aufnahme eines Fahrzeugreifens (4),
**dadurch gekennzeichnet, dass** der Reifenprüfstand (1) weiterhin einen Trommelschlitten (7) umfasst, wobei die Lauftrommelanordnung (2) auf dem Trommelschlitten (7) angeordnet ist und wobei der Trommelschlitten (7) dazu ausgebildet ist, eine Lauffläche (9) des Trommelkörpers (5) in Anlage mit dem Fahrzeugreifen (4) zu bringen.

2. Reifenprüfstand (1) nach Anspruch 1,
**dadurch gekennzeichnet, dass** der Reibradantrieb (6) in Anlage mit dem Außenumfang (9) der Lauffläche (9) bringbar ist oder in Anlage mit einem Innenumfang der Lauffläche (9) bringbar ist.

3. Reifenprüfstand (1) nach mindestens einem der Ansprüche 1 und 2,
**dadurch gekennzeichnet, dass** der Reibradantrieb (6) einen Reibradmotor umfasst, wobei der Reibradmotor dazu ausgebildet ist, eine Drehzahl des Reibradantriebs (6) einzustellen.

4. Reifenprüfstand (1) nach mindestens einem der Ansprüche 1 bis 3,
**dadurch gekennzeichnet, dass** der Reibradantrieb (6) dazu ausgebildet ist, eine Drehzahl des Trommelkörpers (5) um seine Laufachse einzustellen.

5. Reifenprüfstand (1) nach mindestens einem der Ansprüche 1 bis 4,
**dadurch gekennzeichnet, dass** der Trommelkörper (5) metallisch ausgebildet ist.

6. Reifenprüfstand (1) nach mindestens einem der Ansprüche 1 bis 5,
**dadurch gekennzeichnet, dass** der Außenumfang (9) einen Durchmesser von wenigstens 1,5 m aufweist und die Lauffläche (9) eine Breite von wenigstens 0,5 m aufweist.

7. Reifenprüfstand (1) nach Anspruch 1,
**dadurch gekennzeichnet, dass** der Reifenprüfstand (1) weiterhin einen Spindelmotor umfasst, wobei der Spindelmotor dazu ausgebildet ist, eine Drehzahl der Radspindel (3) einzustellen.

8. Reifenprüfstand (1) nach mindestens einem der Ansprüche 1 bis 7,
**dadurch gekennzeichnet, dass** der Reifenprüfstand (1) Synchronisierungsmittel umfasst, wobei die Synchronisierungsmittel dazu ausgebildet sind, eine Laufgeschwindigkeit des Fahrzeugreifens (4) und eine Laufgeschwindigkeit eines Trommelkörpers (5) der Lauftrommelanordnung (2) zu synchronisieren.

9. Reifenprüfstand (1) nach mindestens einem der Ansprüche 1 bis 8,
**dadurch gekennzeichnet, dass** eine Zustellachse des Trommelschlittens (7) parallel zu einer Zustellachse des Reibradschlittens (10) der Lauftrommelanordnung (2) ist.

## Claims

1. Tyre test bench (1) for testing vehicle tyres, comprising a rotating drum assembly (2) for the tyre test bench (1) having a drum body (5) and a friction wheel drive (6), wherein the drum body (5) has on its outer periphery (9) a running surface (9) for contact with a vehicle tyre (4) and is arranged so as to be rotatable about its running axis and wherein the friction wheel drive (6) is configured to drive the drum body (5) when it is in contact with the drum body (5), wherein the friction wheel drive (6) is arranged on a friction wheel carriage (10), wherein the friction wheel carriage (10) is configured to move the friction wheel drive (6) in a feed direction so that the friction wheel drive (6) can be brought into contact with the drum body (5), the tyre test bench (1) further comprising a wheel spindle (3) for holding a vehicle tyre (4),
**characterized in that** the tyre test bench (1) further comprises a drum carriage (7), wherein the rotating drum assembly (2) is arranged on the drum carriage (7) and wherein the drum carriage (7) is configured to bring a running surface (9) of the drum body (5) into contact with the vehicle tyre (4).

2. Tyre test bench (1) according to Claim 1, **characterized in that** the friction wheel drive (6) can be brought into contact with the outer periphery (9) of the running surface (9) or can be brought into contact with an inner periphery of the running surface (9).

3. Tyre test bench (1) according to at least one of Claims 1 and 2,
**characterized in that** the friction wheel drive (6) comprises a friction wheel motor, wherein the friction wheel motor is configured to set a rotational speed of the friction wheel drive (6).

4. Tyre test bench (1) according to at least one of Claims 1 to 3,
**characterized in that** the friction wheel drive (6) is configured to set a rotational speed of the drum body (5) about its running axis.

5. Tyre test bench (1) according to at least one of Claims 1 to 4,
**characterized in that** the drum body (5) is of metallic form.

6. Tyre test bench (1) according to at least one of Claims 1 to 5,
**characterized in that** the outer periphery (9) has a diameter of at least 1.5 m and the running surface (9) has a width of at least 0.5 m.

7. Tyre test bench (1) according to Claim 1, **characterized in that** the tyre test bench (1) further comprises a spindle motor, wherein the spindle motor is configured to set a rotational speed of the wheel spindle (3) .

8. Tyre test bench (1) according to at least one of Claims 1 to 7,
**characterized in that** the tyre test bench (1) comprises synchronization means, wherein the synchronization means are configured to synchronize a running speed of the vehicle tyre (4) and a running speed of a drum body (5) of the rotating drum assembly (2).

9. Tyre test bench (1) according to at least one of Claims 1 to 8,
**characterized in that** a feed axis of the drum carriage (7) is parallel to a feed axis of the friction wheel carriage (10) of the rotating drum assembly (2).

## Revendications

1. Banc d'essai de pneus (1) pour tester des pneus de véhicules, comprenant un agencement de tambour de roulement (2) pour le banc d'essai de pneus (1) avec un corps de tambour (5) et un entraînement à roue de friction (6), le corps de tambour (5) présentant sur sa circonférence extérieure (9) une surface de roulement (9) pour l'application d'un pneu de véhicule (4) et étant agencé de manière à pouvoir tourner autour de son axe de roulement et l'entraînement à roue de friction (6) étant réalisé pour entraîner le corps de tambour (5) en application avec le corps de tambour (5), l'entraînement à roue de friction (6) étant agencé sur un chariot de roue de friction (10), le chariot de roue de friction (10) étant réalisé pour déplacer l'entraînement à roue de friction (6) le long d'une direction d'avance, de telle sorte que l'entraînement à roue de friction (6) peut être amené en application avec le corps de tambour (5), le banc d'essai de pneus (1) comprenant en outre une broche de roue (3) pour recevoir un pneu de véhicule (4), **caractérisé en ce que** le banc d'essai de pneus (1) comprend en outre un chariot de tambour (7), l'agencement de tambour de roulement (2) étant agencé sur le chariot de tambour (7) et le chariot de tambour (7) étant réalisé pour amener une surface de roulement (9) du corps de tambour (5) en application avec le pneu de véhicule (4).

2. Banc d'essai de pneus (1) selon la revendication 1, **caractérisé en ce que** l'entraînement à roue de friction (6) peut être amené en application avec la circonférence extérieure (9) de la surface de roulement (9) ou peut être amenée en application avec une circonférence intérieure de la surface de roulement (9).

3. Banc d'essai de pneus (1) selon au moins l'une quelconque des revendications 1 et 2, **caractérisé en ce que** l'entraînement à roue de friction (6) comprend un moteur de roue de friction, le moteur de roue de friction étant réalisé pour ajuster une vitesse de rotation de l'entraînement à roue de friction (6).

4. Banc d'essai de pneus (1) selon au moins l'une quelconque des revendications 1 à 3, **caractérisé en ce que** l'entraînement à roue de friction (6) est réalisé pour ajuster une vitesse de rotation du corps de tambour (5) autour de son axe de rotation.

5. Banc d'essai de pneus (1) selon au moins l'une quelconque des revendications 1 à 4, **caractérisé en ce que** le corps de tambour (5) est réalisé sous forme métallique.

6. Banc d'essai de pneus (1) selon au moins l'une quelconque des revendications 1 à 5, **caractérisé en ce que** la circonférence extérieure (9) présente un diamètre d'au moins 1,5 m et la surface de roulement (9) présente une largeur d'au moins 0,5 m.

7. Banc d'essai de pneus (1) selon la revendication 1, **caractérisé en ce que** le banc d'essai de pneus (1) comprend en outre un moteur à broche, le moteur à broche étant réalisé pour ajuster une vitesse de rotation de la broche de roue (3).

8. Banc d'essai de pneus (1) selon au moins l'une quelconque des revendications 1 à 7, **caractérisé en ce que** le banc d'essai de pneus (1) comprend des moyens de synchronisation, les moyens de synchronisation étant réalisés pour synchroniser une vitesse de roulement du pneu de véhicule (4) et une vitesse de roulement d'un corps de tambour (5) de l'agencement de tambour de roulement (2).

9. Banc d'essai de pneus (1) selon au moins l'une quelconque des revendications 1 à 8, **caractérisé en ce qu'**un axe d'avance du chariot de tambour (7) est parallèle à un axe d'avance du chariot de roue de friction (10) de l'agencement de tambour de roulement (2).
